# DEMANDE DE BREVET EUROPEEN

(11) **EP 1 517 422 A1**
(43) Date de publication de la demande: **23.03.2005**
(21) Numéro de dépôt: 04292216.1
(22) Date de dépôt: 15.09.2004
(51) Int. Cl.: H02G 1/12

(54) **Outil à dénuder un câble gaine**

(30) Priorité: 18.09.2003 FR 0310976
(71) Demandeur: Régie Autonome des Transports Parisiens, 75599 Paris Cedex 12 (FR)
(72) Inventeur: Maggi, Georges, 92230 Gennevilliers (FR); Saguet, Jacques, 95100 Argenteuil (FR)
(74) Mandataire: Blot, Philippe Robert Emile

(57) **Abrégé**

Cet outil comporte un boîtier (4) délimitant une gorge (6) de réception d'un câble à dénuder. Une lame (10) est en outre prévue en travers de cette gorge pour découper plus ou moins profondément la gaine externe du câble. Selon l'invention, l'outil comporte en outre des moyens de réglage du dénudage du câble, actionnables depuis l'extérieur du boîtier (4), notamment des moyens de réglage de la profondeur de coupe du câble et des moyens de réglage de la longueur du câble à dénuder.

Application au dénudage de câbles synthétiques isolants, tels que des câbles électriques, téléphoniques ou optiques.

## Description

La présente invention concerne un outil à dénuder un câble gainé. Elle s'applique au domaine des câbles pourvus d'une gaine externe, c'est-à-dire aux câbles généralement dits synthétiques isolants, tels que les câbles électriques, téléphoniques ou optiques. L'invention s'applique de préférence aux câbles de diamètre extérieur inférieur à 11 mm.

Pour permettre le raccordement électrique, ou plus généralement le câblage de tels câbles gainés, il est souvent nécessaire de dénuder l'extrémité du câble à raccorder, c'est-à-dire de retirer la gaine externe sur quelques centimètres de la longueur du câble à partir de cette extrémité, sans pour autant altérer l'âme conductrice du câble protégée par la gaine. Il est ainsi primordial d'éviter d'exercer toute contrainte excessive sur le coeur du câble, notamment en traction suivant la longueur du câble.

A cet effet, on connaît un outil à dénuder distribué par la société SIEMENS et commercialement désigné sous la dénomination « FASTCONNECT ». Cet outil se présente sous la forme d'un boîtier délimitant une gorge de réception du câble à dénuder et équipé d'une lame fixe qui s'étend en travers de la gorge. Une fois le câble logé et retenu dans la gorge, la lame permet la découpe périphérique de la gaine en faisant tourner l'outil autour du câble. En utilisant une lame dont la profondeur de coupe est prédéterminée en fonction du câble que l'on souhaite dénuder, il est alors possible d'obtenir une découpe nette de la gaine.

Ce type d'outil se révèle cependant peu pratique lorsque l'utilisateur souhaite dénuder successivement plusieurs câbles de diamètres différents ou dont les gaines ont des épaisseurs variables puisqu'il lui est alors nécessaire soit de disposer d'autres outils du même type spécifiquement associés à chaque câble, soit de démonter le boîtier pour manipuler le support de la lame, appelé couramment « cassette », en vue de modifier la position de la lame lorsque la cassette le permet, voire de changer la cassette utilisée, en fonction de l'épaisseur de gaine à découper. De plus, l'utilisateur ne connaît pas avec précision la longueur de câble qu'il va dénuder et, sauf à utiliser des instruments de mesure annexes, ne peut qu'estimer grossièrement l'étendue du dénudage.

Le but de la présente invention est d'améliorer le type d'outil à dénuder évoqué ci-dessus, en le rendant plus pratique à utiliser, notamment lors de dénudages successifs de câbles différents.

A cet effet, l'invention a pour objet un outil à dénuder un câble gainé, tel que défini à la revendication 1.

Les moyens de réglage de l'outil selon l'invention sont directement actionnables par l'utilisateur juste avant l'opération de découpe proprement dite, alors que le câble est sur le point d'être ou est déjà reçu dans la gorge. L'adaptabilité de l'outil pour différents câbles est ainsi nettement améliorée, ce qui facilite et raccourcit l'intervention de l'utilisateur. La précision du dénudage est également accrue.

D'autres caractéristiques de cet outil, prises isolément ou selon toutes les combinaisons techniquement possibles, sont énoncées aux revendications 2 à 12.

L'invention sera mieux comprise à la lecture de la description qui va suivre, donnée uniquement à titre d'exemple et faite en se référant aux dessins sur lesquels :
- la figure 1 est une vue en élévation d'un outil à dénuder selon l'invention ;
- les figures 2 et 3 sont des vues de l'outil de la figure 1, selon respectivement les flèches II et III ;
- les figures 4A et 4B sont des schémas essentiellement électriques d'une partie de l'outil de la figure 1 ; et
- les figures 5A, 5B et 5C sont des vues en perspective illustrant des étapes successives d'utilisation de l'outil de la figure 1.

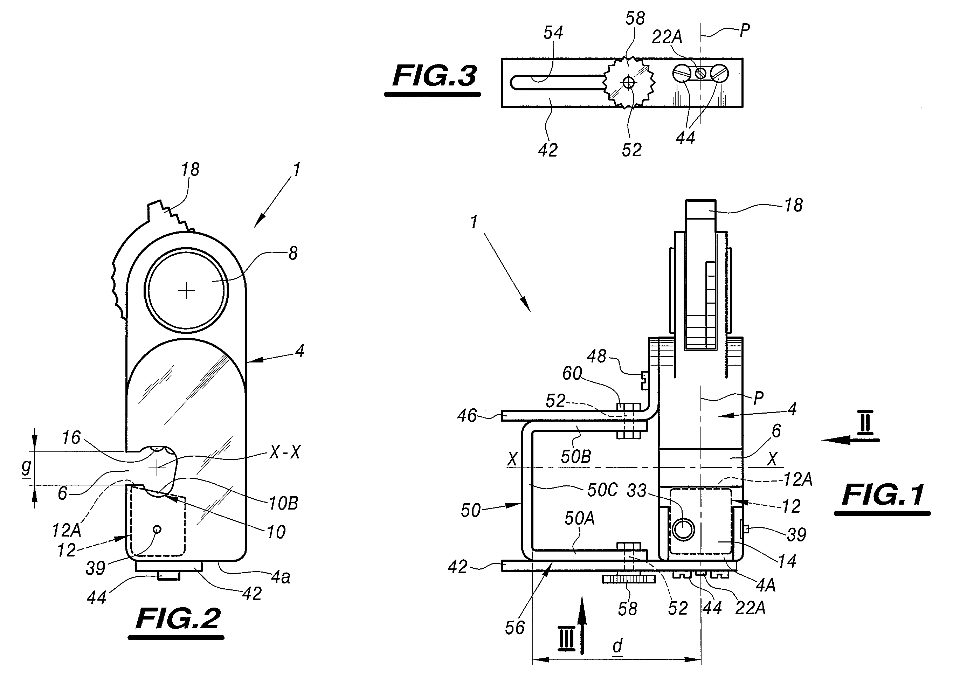

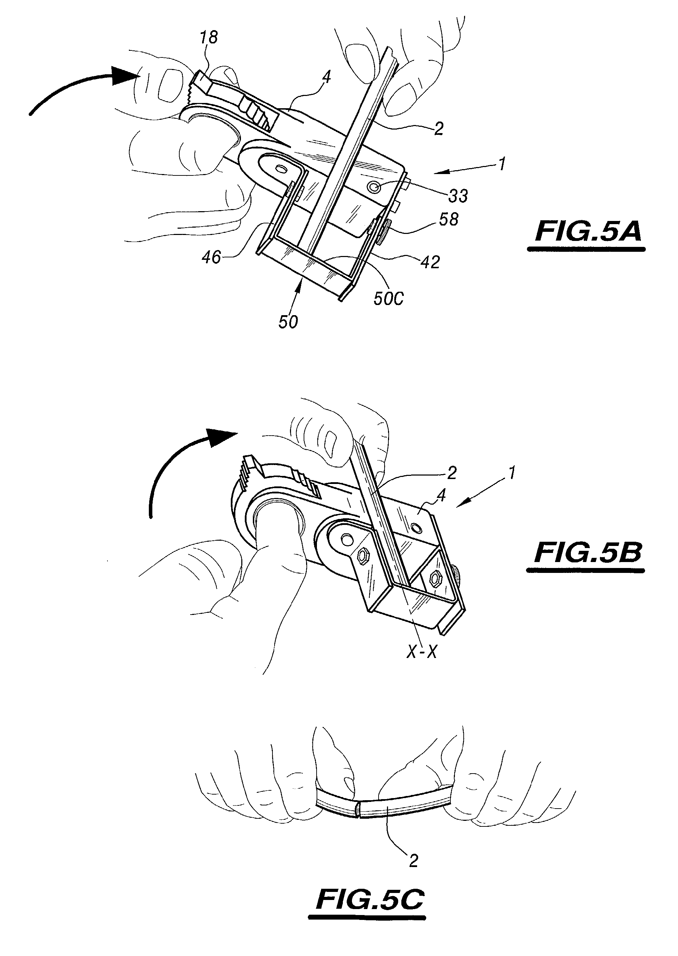

Sur les figures 1 à 3 est représenté un outil 1 à dénuder un câble gainé, ce câble étant référencé 2 sur les figures 5A à 5C qui seront décrites plus loin. L'outil 1 est adapté pour découper en périphérie une gaine externe du câble protégeant son âme conductrice, en une zone donnée suivant la longueur du câble, de façon à permettre le retrait de la partie de gaine s'étendant entre la découpe et l'extrémité libre adjacente du câble. L'outil 1 s'applique principalement au dénudage des câbles synthétiques isolants, tels que les câbles électriques, téléphoniques ou optiques.

Par commodité, la suite de la description sera orientée de telle sorte que les termes « inférieur » et « supérieur » désignent les parties respectives basse et haute des figures 1 et 2.

L'outil 1 comporte un boîtier 4 en matière plastique, de forme générale parallélépipédique et pourvu dans sa partie courante d'une gorge transversale 6 destinée à recevoir le câble 2 pris suivant sa longueur. La gorge 6 s'étend suivant un axe longitudinal X-X et présente une largeur g (suivant une direction perpendiculaire à l'axe X-X) d'environ 11 mm, permettant ainsi l'introduction depuis l'extérieur de câbles de diamètre inférieur à environ 11 mm.

Le boîtier plastique 4 est muni également à son extrémité supérieure d'un orifice essentiellement cylindrique 8, d'axe sensiblement parallèle à l'axe X-X. Cet orifice est destiné à permettre l'introduction d'un doigt de l'utilisateur, pour des raisons expliquées plus loin, en regard des figures 5A à 5C.

Pour permettre la découpe périphérique de la gaine externe du câble, l'outil 1 est équipé d'une lame métallique 10 dont seul le bord tranchant 10B est visible sur la figure 2. Cette lame, notamment son bord tranchant, est à même de s'étendre en travers de la gorge 6, dans un plan P sensiblement perpendiculaire à l'axe X-X, destiné à former le plan de découpe périphérique de la gaine.

La lame 10 est portée par une cassette 12 indiquée pour l'essentiel en traits pointillés sur les figures 1 et 2. Cette cassette 12, dont la structure générale est connue en soi, est solidarisée au boîtier 4 de façon amovible de manière à permettre son dégagement pour remplacer la lame lorsque cette dernière est usée. Différents moyens pour solidariser de façon amovible la cassette au boîtier 4 sont envisageables. A titre d'exemple, le boîtier est muni d'une cavité de logement de la cassette située entre la gorge 6 et la paroi inférieure 4a du boîtier 4. La cassette est clipsée à l'intérieur de cette cavité qui est fermée par un couvercle basculant 14 à même d'être en partie dégagé pour permettre l'introduction et le retrait des cassettes.

Lorsque la cassette est en place dans le boîtier, sa paroi supérieure 12A délimite l'essentiel de la partie inférieure de la gorge 6, comme représenté sur la figure 2. Cette paroi est ajourée au moins dans le plan P pour laisser passer la lame 10. Sur la figure 2, le tranchant de la lame affleure la paroi 12A.

Pour assurer le calage du câble 2 contre la lame 10 à l'intérieur de la gorge 6, l'outil 1 est équipé d'un ou de plusieurs rouleaux 16 d'appui sur le câble, dont les axes sont sensiblement parallèles à l'axe X-X. Sur la figure 2, seule une petite partie périphérique des rouleaux est visible et s'étend à l'intérieur de la partie supérieure de la gorge 6, en regard de la paroi supérieure 12A de la cassette 12 et à une distance de celle-ci d'environ 11 mm pour permettre la libre introduction du câble entre la cassette et les rouleaux. Au moyen d'un mécanisme interne au boîtier 4, connu en soi et non représenté, les rouleaux 16 sont déplaçables pour se rapprocher de la cassette, et donc de la lame 10, afin d'amener et de caler fermement le câble contre la paroi 12A. Ce mécanisme est actionnable par un levier 18 qui s'étend en partie à l'extérieur du boîtier 4, suivant une partie de la périphérie de l'orifice 8.

Avantageusement, l'outil 1 est muni de moyens non représentés de réglage de la course d'appui des rouleaux en fonction du degré d'actionnement du levier 18.

Selon l'invention, l'outil 1 est conçu pour, en fonctionnement, permettre le réglage d'au moins certains paramètres du dénudage, depuis l'extérieur du boîtier 4.

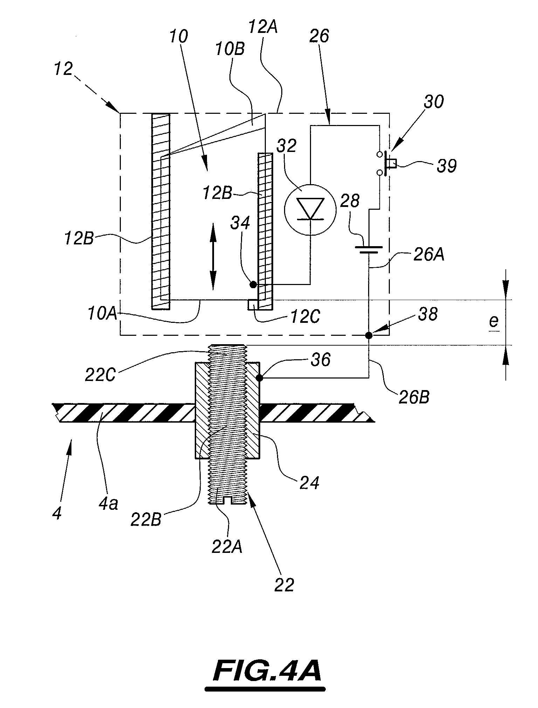

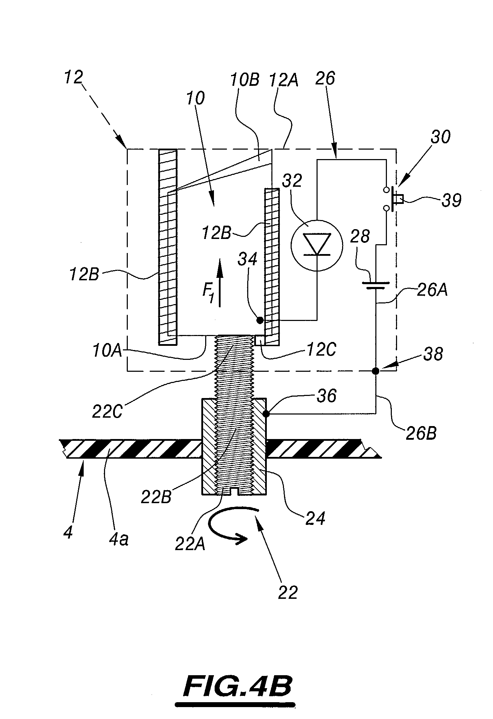

A cet effet, comme schématisé sur les figures 4A et 4B, l'outil 1 comporte des moyens de réglage de la profondeur de coupe de la lame 10 dans la gaine du câble 2. Ces moyens sont adaptés pour régler, de manière choisie par l'utilisateur, la position de la lame 10 dans le plan de coupe P, notamment l'écartement entre le bord tranchant 10B de la lame et l'axe X-X de la gorge 6.

Ces moyens de réglage comprennent une vis 22 de poussée de la lame 10 dans le plan P. Plus précisément, cette vis 22 comporte une tête d'entraînement 22A qui peut être sollicitée depuis l'extérieur du boîtier 4 à travers sa paroi inférieure 4a, un pied opposé 22B adapté pour s'appuyer contre le chant 10A de la lame opposé à son bord tranchant 10B, et un corps fileté 22C reçu dans une bague taraudée métallique 24, solidaire de la paroi 4a du boîtier. Lorsque le pied 22B est en appui contre la lame 10, comme sur la figure 4B, la vis 22 commande le déplacement de la lame par rapport au boîtier dans le plan de coupe P (du bas vers le haut sur les figures 1, 2 et 4B), permettant ainsi le réglage de la profondeur de pénétration de la lame dans la gaine du câble à dénuder. Il est ainsi prévu que l'entraînement en rotation de la vis 22 sur un tour commande une avancée prédéterminée de la lame représentée par la flèche F₁ à la figure 4B.

La lame 10 possède à cet effet une liberté de mouvement par rapport à la cassette 12 dans le plan P, suivant la direction verticale sur les figures 1 et 2. Elle est par exemple montée libre suivant cette direction dans des nervures de guidage 12B, des rainures ou analogues, prévues dans la cassette de support 12. De plus, une butée 12C est prévue dans la cassette, par exemple à l'extrémité d'une des nervures 12B de guidage de la lame, pour que, lorsque la lame est escamotée au.maximum dans la cassette comme sur les figures 4A et 4B, son bord tranchant 10B soit situé en affleurement de la paroi 12A, c'est-à-dire pour que la lame soit dans la configuration de la figure 2.

Dans la mesure où la lame 10 est portée par la cassette 12, la vis 22 est à même d'être suffisamment dégagée vers l'extérieur pour ne pas empêcher le retrait et l'introduction de cette cassette. Comme schématiquement représenté sur la figure 4A, il en résulte l'existence d'un écartement e entre le pied 22B de la vis 22 et la lame 10, à même d'être rattrapé par la vis 22 en entraînant cette dernière sur une course morte correspondante. Pour permettre à l'utilisateur de détecter le rattrapage de cet écartement e, les moyens de réglage de la profondeur de coupe sont pourvus d'un circuit électrique 26 comprenant une batterie 28, un interrupteur mécanique 30 et une diode électroluminescente 32. Une borne 34 du circuit 26 est connectée à la lame métallique 10 tandis que la borne opposée 36 est connectée à la bague taraudée 24. Plus précisément, le circuit 26 est constitué, d'une part, d'une partie 26A qui est agencée sur ou à l'intérieur de la cassette 12 et qui comprend les composants électriques 28 et 32 ainsi que les bornes de connexion de l'interrupteur 30 et, d'autre part, d'une partie extérieure 26B sous forme d'un conducteur, qui relie la borne 36 à la partie 26A en formant avec cette dernière une zone de connexion par contact 38 à la surface de la cassette. L'interrupteur 30 est actionnable depuis l'extérieur du boîtier 4, au moyen d'un bouton poussoir 39 agencé par exemple sur un des flancs du boîtier, comme représenté sur les figures 1 et 2.

Tant que le circuit électrique 26 est ouvert, la diode 32 est éteinte. En revanche, lorsque le circuit est fermé tant au niveau des bornes de l'interrupteur 30 qu'au niveau de la zone d'appui entre le pied 22B de la vis 22 et le bord 10B de lame 10, la diode est allumée. Pour permettre à l'utilisateur de voir l'allumage de la diode, une fenêtre correspondante 33 (figure 1) est ménagée dans le couvercle rabattable 14, à l'aplomb de la cassette.

En plus des moyens de réglage de la profondeur de coupe, l'outil 1 est muni de moyens de réglage de la longueur de câble à dénuder. Comme représenté sur les figures 1 et 3, ces moyens comportent un flasque inférieur plan 42, solidarisé au boîtier 4 par des vis de fixation 44, un flasque supérieur 46 en forme de L, également solidarisé au boîtier par des vis de fixation 48, et un étrier rigide 50 en forme de U, monté coulissant sur les flasques 42 et 46. Plus précisément, les flasques 42 et 46 s'étendent sur un même côté du boîtier 4, respectivement de part et d'autre de l'axe X-X et reçoivent entre eux l'étrier 50. Ce dernier est équipé, sur chacune de ses ailes 50A et 50B, d'un pion saillant 52 reçu dans une fente rectiligne correspondante 54 formée dans le flasque associé 42 ou 46. A titre d'exemple, chaque pion 52 se présente sous la forme d'une vis solidaire de l'étrier et introduite à son extrémité libre dans une des fentes 54.

L'étrier 50 est ainsi déplaçable en translation suivant l'axe X-X de façon à faire varier l'écartement entre le plan de coupe P et le fond 50C de l'étrier 50 sur lequel l'extrémité libre du câble va être placée en butée. Cette distance correspond à la longueur de câble à dénuder.

Pour quantifier la distance d entre le fond 50C et le plan de coupe P, c'est-à-dire la longueur de câble à dénuder, le flasque 42 et l'aile associée 50A de l'étrier portent des marques ou repères respectifs, tels que des graduations métriques 56.

Les moyens de réglage de la longueur de câble à dénuder comportent un moyen de blocage de l'étrier 50 par rapport aux flasques 42 et 46, notamment sous la forme d'une mollette de serrage 58 adaptée pour coincer le flasque 42 contre l'aile 50A de l'étrier. Cette mollette est par exemple rapportée sur l'extrémité libre de la vis formant le pion coulissant 52 de l'aile 50A.

En outre, pour éviter que l'aile supérieur 50B de l'étrier se désengage du flasque 46, un contre-écrou 60 est monté à l'extrémité libre de la vis supérieure 42 de manière à ce que le flasque soit retenu, sans être coincé, entre ce contre-écrou et l'aile 50B.

L'utilisation de l'outil 1 pour dénuder un câble est la suivante :

On considère qu'on dispose du câble 2 de la figure 5A, dont le diamètre est inférieur à 11 mm et dont on connaît l'épaisseur de gaine à découper pour accéder à l'âme du câble.

Dans un premier temps, on règle sur l'outil la longueur de câble qui va être dénudée. Pour ce faire, on fait coulisser l'étrier 50 le long des flasques 42 et 46. L'utilisateur se sert des graduations 56 pour imposer une distance d voulue entre l'étrier et le boîtier 4, donc entre le fond 50C de l'étrier et le plan P, selon la longueur de dénudage souhaitée.

On introduit ensuite le câble 2 à l'intérieur de la gorge 6 de façon à ce que son extrémité libre soit en butée contre le fond 50C de l'étrier, comme représenté sur la figure 5A. On .actionne alors le levier 18 du mécanisme de déplacement des rouleaux 16 de façon à ce que ces derniers déplacent le câble 2 vers la cassette 12 jusqu'à l'appuyer fermement contre sa paroi 12A.

En fonction du câble 2, et plus particulièrement de l'épaisseur connue ou supposée de la gaine, on règle la profondeur de pénétration de la lame 10 dans le câble en commandant sa position dans le plan de coupe P. Pour ce faire, avant d'introduire le câble 2 dans la gorge 6, on a veillé à ce que la tête 22A de la vis de réglage 22 soit suffisamment dégagée de la bague 24, comme sur la figure 4A, pour que la lame puisse être, si nécessaire, repoussée librement dans la cassette par le câble 2 mis en appui par les rouleaux 16 jusqu'à ce que son bord tranchant 10B ne soit qu'en affleurement de la paroi 12A de la cassette et non en saillie de cette paroi. L'utilisateur actionne alors l'interrupteur 30 au moyen d'un de ses doigts, depuis l'extérieur du boîtier 4, et, au moyen d'un tourne-vis approprié manipulé par son autre main, il entraîne doucement en rotation la vis de réglage 22 jusqu'à ce que la diode 32 s'allume, ce qui définit en quelque sorte le « point zéro » pour régler la profondeur de coupe. L'outil 1 est alors dans la configuration de la figure 4B.

En fonction de la profondeur de coupe désirée, l'utilisateur continue ensuite d'entraîner la vis de réglage 22, sachant par exemple qu'à chaque tour de cette vis correspond une avance de 0,7 mm de la lame 10, c'est-à-dire une pénétration de 0,7 mm dans la gaine du câble retenu dans la gorge 6.

Comme représenté sur la figure 5B, l'utilisateur fait ensuite tourner l'outil 1 autour du câble 2, en l'entraînant au moyen de son doigt glissé dans l'orifice 8, de façon à ce que l'outil décrive au moins un tour, de préférence deux. Durant ce mouvement, la lame 10 découpe la gaine du câble 2 sur la profondeur désirée.

L'utilisateur libère ensuite le levier 18 et dégage le câble 2 de l'outil 1.

Comme représenté sur la figure 5C, il peut être nécessaire de légèrement cintrer le câble 2 afin de terminer la rupture de la gaine isolante. L'isolant sectionné est ensuite retiré. Si la gaine ne peut être retirée facilement, le câble est réintroduit dans la gorge 6 et l'utilisateur actionne de nouveau les moyens de réglage 20 de façon à modifier en conséquence la profondeur de coupe de la lame 10.

L'outil selon l'invention s'adapte ainsi à différents types de câbles à dénuder, que ces câbles soient de diamètres extérieurs différents ou surtout d'épaisseurs de gaine différentes. Pour chaque câble, il suffit à l'utilisateur de régler en conséquence la profondeur de coupe, facilement et rapidement depuis l'extérieur de l'outil 1. Si nécessaire, la longueur de câble à dénuder peut également facilement être modifiée avec précision, en fonction des besoins.

Par ailleurs, l'outil selon l'invention s'obtient facilement à partir d'un outil pré-existant dépourvu des moyens de réglage décrits ci-dessus. En effet, les aménagements nécessaires pour équiper un tel outil de ces moyens sont faciles à mettre en oeuvre puisqu'ils concernent, d'une part, la cassette 12 interchangeable et, d'autre part, les parois extérieures du boîtier 4. Avantageusement, certaines des vis 44, 48 de fixation des flasques 42 et 46 sont ainsi reçues dans des taraudages correspondants du boîtier, initialement prévus pour recevoir des vis d'assemblage de ce boîtier.

La mise en place et/ou l'utilisation des moyens de réglage de la profondeur de coupe et des moyens de réglage de la longueur de câble à dénuder sont indépendants de sorte que les premiers peuvent être présents et mis en oeuvre sans les seconds et inversement. Les avantages respectifs de ces moyens se combinent avantageusement pour améliorer substantiellement la rapidité et la qualité des opérations de dénudage.

Divers variantes et aménagements à l'outil décrit ci-dessus sont en outre envisageables. Par exemple, la largeur g de la gorge 6 peut être dimensionnée plus grande pour accepter des câbles de plus gros diamètre. De plus, pour éviter que la vis de réglage 22 se dévisse de la bague 24 alors que l'outil est en fonctionnement, et que la profondeur de coupe soit alors déréglée, des moyens de retenue ou de freinage de cette vis par rapport au boîtier 4, en particulier par rapport à la bague 24, peuvent être prévus, par exemple sous la forme d'une molette rapportée ou en interposant entre la vis et la bague une matière plastique appropriée.

## Revendications

1. Outil à dénuder un câble gainé (2), comportant un boîtier (4) délimitant une gorge (6) de réception du câble à dénuder et une lame (10) de découpe périphérique de la gaine du câble, portée par le boîtier et adaptée pour être disposée en travers de ladite gorge, **caractérisé en ce qu'**il comporte des moyens (22, 24, 26, 42, 46, 50, 58) de réglage du dénudage du câble, actionnables depuis l'extérieur du boîtier (4), lorsque la lame est en place dans le boîtier.

2. Outil suivant la revendication 1, **caractérisé en ce que** les moyens de réglage du dénudage du câble comportent des moyens (22, 24, 26) de réglage de la profondeur de coupe de la gaine du câble (2) par la lame (10).

3. Outil suivant la revendication 2, **caractérisé en ce que** les moyens de réglage de la profondeur de coupe incluent des moyens (22, 24) de déplacement (F₁) de la lame (10) par rapport au boîtier (4), suivant une direction transversale à la gorge (6), sur une distance choisie par l'utilisateur.

4. Outil suivant la revendication 3, **caractérisé en ce que** lesdits moyens de déplacement comportent un actionneur (22) de poussée de la lame (10) contre le câble (2), déplaçable par rapport au boîtier (4).

5. Outil suivant la revendication 4, **caractérisé en ce que** ledit actionneur est une vis ou une tige filetée (22) qui coopère avec un taraudage (23) fixe par rapport au boîtier (4) et qui est adaptée pour s'appuyer contre un chant non tranchant (10A) de la lame (10).

6. Outil suivant l'une des revendications 4 ou 5, **caractérisé en ce que** les moyens de réglage de la profondeur de coupe comportent en outre des moyens (26) de détection du rattrapage d'un écartement (e) entre l'actionneur de poussée (22) et la lame (10).

7. Outil suivant la revendication 6, **caractérisé en ce que** lesdits moyens de détection (26) sont de nature électrique et sont équipés d'un interrupteur de commande (30) actionnable depuis l'extérieur du boîtier (4).

8. Outil suivant l'une des revendications 6 ou 7, **caractérisé en ce qu'**il comporte une cassette (12) portant la lame (10) et solidarisée de façon amovible au boîtier (4) et **en ce qu'**une partie active (26A) des moyens de détection (26) est agencée sur ou à l'intérieur de la cassette (12).

9. Outil suivant l'une quelconque des revendication précédentes, **caractérisé en ce que** les moyens de réglage du dénudage du câble incluent des moyens (42, 46, 50, 58) de réglage de la longueur du câble à dénuder (2).

10. Outil suivant la revendication 9, **caractérisé en ce que** les moyens de réglage de la longueur de câble à dénuder comportent une butée (50C) pour l'extrémité libre de la partie de câble à dénuder, située dans le prolongement de la gorge (6) et mobile par rapport au boîtier (4) au moins suivant la direction longitudinale (X-X) de la gorge (6).

11. Outil suivant la revendication 10, **caractérisé en ce que** les moyens de réglage de la longueur du câble à dénuder (42, 50) sont munis de repères (56) quantifiant à l'utilisateur la distance (d) entre la butée (50C) et le plan de coupe (P) de la lame (10).

12. Outil suivant l'une des revendications 10 ou 11, **caractérisé en ce que** les moyens de réglage de la longueur du câble à dénuder comportent au moins une pièce (42, 46) de guidage de la butée mobile (50), solidarisée au boîtier (4) et un moyen (58) réversible de blocage de la butée mobile par rapport au boîtier (4).
